# EUROPÄISCHE PATENTSCHRIFT

(11) **EP 2 367 155 B1**
(45) Veröffentlichungstag und Bekanntmachung des Hinweises auf die Patenterteilung: **06.05.2020**
(21) Anmeldenummer: 11158557.6
(22) Anmeldetag: 16.03.2011
(51) Int. Cl.: G07C 5/00, G07C 5/08, G05B 23/02

(54) **ANORDNUNG UND VERFAHREN ZUR FAHRZEUGZUSTANDSUNTERSUCHUNG**
METHOD AND DEVICE FOR INSPECTING THE CONDITION OF A VEHICLE
AGENCEMENT ET PROCÉDÉ DESTINÉS AU CONTRÔLE DE L'ÉTAT D'UN VÉHICULE

(30) Priorität: 16.03.2010 DE 102010002930; 01.07.2010 DE 102010030829
(43) Veröffentlichungstag der Anmeldung: 21.09.2011
(73) Patentinhaber: FSD Fahrzeugsystemdaten GmbH, 01307 Dresden (DE)
(72) Erfinder: Pillau Dirk, 01157 Dresden (DE); Heinzmann Jörg, 01277 Dresden (DE); van Calker Jörg, 01277 Dresden (DE); Bönninger Jürgen, 01326 Dresden (DE)
(74) Vertreter: Lippert Stachow Patentanwälte Rechtsanwälte Partnerschaft mbB

(56) Entgegenhaltungen:
- EP-A2- 1 845 494
- DE-A1-102007 056 210
- US-A1- 2005 182 537
- US-A1- 2007 100 520
- US-A1- 2007 233 340
- US-B1- 6 181 992

## Beschreibung

Die Erfindung betrifft ein Verfahren zur Fahrzeugzustandsuntersuchung eines Fahrzeuges, bei dem Untersuchungen von Ausführung, Zustand, Funktion und / oder Wirkung der verbauten Bauteile und Systeme durchgeführt werden. Die Erfindung betrifft auch eine Anordnung zur Durchführung des Verfahrens.

Aus der DE 10 2004 012 143 B3 ist ein Verfahren zum Testen der Funktion von in einem Kraftfahrzeug verbauten elektrischen und elektronischen Komponenten bekannt. Dadurch soll die Vielzahl der elektrischen und elektronischen Komponenten und deren Zusammenwirken einem Funktionstest unter möglichst realen Prüfbedingungen unterzogen werden. Hierbei werden von einem zu dem zu prüfenden Fahrzeug typgleichen Fahrzeug Testdaten unter realen Fahrbedingungen aufgenommen und anschließend dem Testfahrzeug auf den Bus, über den die Komponenten miteinander verbunden sind, gegeben. Hierbei handelt es sich immer um eine Diagnose an ein und demselben Fahrzeugtyp, dessen Busprotokoll und die Schnittstellenkonfigurationen, einschließlich der Konfiguration der Fahrzeug-Diagnose-Schnittstelle, bekannt sind und unverändert bleiben.

In der DE 20 2006 019 993 U1 ist ein mobiles Diagnosegerät für Kraftfahrzeuge beschrieben. Diese Lösung setzt einen Adapter ein, der an eine OBD-Schnittstelle (OBD = on-boarddiagnostics) anschließbar ist und der einen Prozessor aufweist. Dieser Prozessor steuert einerseits die Konfiguration eines Interface für den fahrzeugtypspezifischen Anschluss des Adapters an die fahrzeugtypspezifisch beschaltete OBD-Schnittstelle. Andererseits steuert dieser Prozessor das Auslesen eines Fehlerspeichers. Damit dient diese Lösung der Fahrzeugdiagnose, bei der festgestellt wird, ob während des Betriebs des Fahrzeuges Fehler aufgetreten sind. Das Auslesen des Fehlerspeichers wird dahingehend überwacht, dass der Bedienperson signalisiert wird, wenn ein Fehler in dem Fehlerspeicher festgestellt wird. Darüber hinaus ist bei dieser Lösung eine Konfiguration für einen bestimmten Fahrzeugtyp zwar möglich, jedoch ist ein ständiger Fahrzeugtypwechsel nicht vorgesehen, insbesondere wenn kurze Wechselzeiten eingehalten werden müssen.

In der DE 10 2007 056 210 A1 wird ein Verfahren zur Diagnose eines Steuergerätes in einem Kraftfahrzeug für den Service beschrieben. Derartige Steuergeräte sind für einzelne Fahrzeugkomponenten, wie beispielsweise für Motoren oder Getriebe, vorgesehen. Durch diese Lösung wird das Problem geringer Ressourcen in den Steuergeräten dadurch gelöst, dass in den Steuergeräten die Funktionalität des Herunterladens von Zusatzsoftware verliehen wird, die sodann auf einem flüchtigen oder zumindest überschreibbaren Speicher des Steuergerätes gespeichert werden kann. Mittels dieser Zusatzsoftware können dann Prüfungsroutinen in dem Steuergerät durchgeführt werden, die der Verbesserung der Steuerroutinen selbst aber auch der Verbesserung der Bereitstellung von Informationen in den als Informationsquelle dienenden Steuergeräten dient. Die Bereitstellung der Zusatzsoftware erfolgt über einen Werkstatttester, nach dem dieser mit dem entsprechenden Steuergerät verbunden ist. Die Zusatzsoftware wird dabei entweder von einem Speicher in den Werkstatttester oder über einen externen Speicher bereitgestellt. Mit der Lösung nach dieser Druckschrift wird somit die Fahrzeugdiagnose erleichtert und verbessert. Eine Fahrzeugzustandsuntersuchung kann jedoch nicht durchgeführt werden.

Die US 6 181 992 B1 offenbart ein Fahrzeugdiagnosesystem.

Die vorliegende Erfindung bezieht sich im Gegensatz zu den nach dem Stand der Technik bekannten Lösungen nicht auf eine Fahrzeugdiagnose, bei der nach in der Vergangenheit aufgetretenen Fehlern einzelner Fahrzeugkomponenten gesucht wird, sondern auf die Fahrzeugzustandsuntersuchung. So ist es nämlich seit 2006 in Deutschland gesetzliche Pflicht, dass auch alle sicherheitsrelevanten elektronischen Komponenten in regelmäßigem Abstand überwacht werden. Hierbei ist es beispielsweise von Interesse, ob die vom Hersteller in dem jeweiligen Fahrzeug eingesetzten serienmäßigen oder optionalen Komponenten überhaupt vorhanden sind (Verbauprüfung) und wie sich deren aktueller Funktionszustand darstellt. Darüber hinaus kann es für einzelne Komponenten von Interesse sein, diese auch auf ihre Funktions- und Wirkfähigkeit hin zu überprüfen.

Darüber hinaus können heute viele Überprüfungen nur manuell oder optisch und ohne objektive Kriterien, wie sie etwa eine elektronische Verarbeitung ermöglicht, durchgeführt werden.

Eine Lösung, die in der Lage ist, alle möglichen Informationen, die durch das Fahrzeug oder über das Fahrzeug zu empfangen und einer Analyse zuzuführen, ist nicht bekannt. Insbesondere ist kein Mittel bekannt, mit dem zum Zwecke der Fahrzeugzustandsuntersuchung
- über eine Schnittstelle, insbesondere über eine im Fahrzeug vorhandene Fahrzeug-Diagnose-Schnittstelle mit dem Fahrzeug bzw. mit seinen Steuergeräten,
- mit dem mit fahrzeugexternen Sensoren oder Prüfeinrichtungen und/oder
- mit weiteren Prüfsystemen
kommuniziert werden kann.

Es soll an dieser Stelle ausdrücklich betont werden, dass in der gesamten Beschreibung unter dem Begriff des Fahrzeuges jede Fahrzeugart, wie allgemein Kraftfahrzeuge oder Nutzfahrzeuge, Krafträder usw., und der Kombinationen davon verstanden werden soll.

Die Verbauprüfung geschieht derzeit anhand optischer äußerer Merkmale oder anhand von Anzeigen bei der Selbstkontrolle, z.B. durch eine Beobachtung der Kontrolllampen bei dem Selbsttest nach dem Einschalten der Zündung. Dabei ist es problematisch, dass nicht alle Komponenten über eine Anzeige bei der Selbstkontrolle oder andere äußere Merkmale erkennbar sind und dass für die Prüfung nur eine begrenzte Zeit zur Verfügung steht, wobei das Suchen nach äußerlich sichtbaren Merkmalen ungünstig ist, insbesondere wenn verschiedenste Fahrzeugtypen hintereinander zu prüfen sind.

Der Erfindung liegt somit die Aufgabe zugrunde, eine Fahrzeugzustandsuntersuchung aller sicherheitsrelevanter elektronischer Fahrzeugkomponenten auf elektronischem Wege und mit geringem Zeitaufwand zu realisieren und dabei eine sehr schnelle Anpassung an verschiedene Fahrzeugtypen zu ermöglichen.

Aspekte der Erfindung finden sich in den unabhängigen Ansprüchen 1 und 15.

Verfahrenstechnisch ist dabei vorgesehen, dass mittels eines Adapters eine Informationsquelle aus mehreren Informationsquellen, nämlich Steuergeräten eines Fahrzeuges, einer Fahrzeug-Diagnose-Schnittstelle, einer EBS-CAN-Schnittstelle, einer Anhänger-Licht-Steckdose, Sensoren auf dem Adapter, Sensoren außerhalb des Adapters und einer externen Diagnoseeinrichtung oder einem externen Prüfstand, die mit Fahrzeugkomponenten in Wirkungsverbindung stehen und deren jeweilige Konfigurationen einer Verbindung zur Kommunikation mit der Informationsquelle bekannt ist, ausgewählt wird. Zu der ausgewählten Informationsquelle wird eine Datenverbindung mit der bekannten Konfiguration zu einer Informationssenke, bestehend aus dem Adapter selbst und/ oder einem mit dem Adapter verbundenen Rechner und/ oder einer externen Analyseeinheit aufgebaut und die Analyse, insbesondere vermittels der Plausibilisierung verschiedener Daten gegeneinander oder gegen Referenzwerte, mit den Daten der Informationssenke durchgeführt wird.

Die Auswahl einer Informationsquelle geschieht entweder durch eine manuelle Auswahl, indem dem Adapter genau vorgegeben wird, welche Informationsquellen genutzt werden sollen. Dies kann beispielsweise dadurch geschehen, dass eine Liste möglicher Informationsquellen ausgeben wird. Dabei können Vorgabewerte, welche Informationsquellen überhaupt zur Verfügung stehen können, genutzt werden. Es kann von dem Adapter aber auch ein Scannen nach Informationsquellen durchgeführt werden. Wichtig ist dabei das Merkmal, dass die Möglichkeiten der Kommunikationsverbindungen dem Adapter vorliegen, beispielsweise in Form einer Datei, in der alle Verbindungsmöglichkeiten und die Informationsquellenspezifischen Konfigurationen gespeichert sind. Beim Scannen werden dann die Kommunikationsverbindungen aufgerufen, um darüber das Vorhandensein von Informationsquellen festzustellen, die dann zur Auswahl zur Verfügung stehen. Die Festlegung selbst, welche Information genutzt werden soll, kann manuell oder automatisch vorgenommen werden.

Die Kommunikationsverbindungen können unterschiedlicher Art sein, nämlich
- OBD Interface wobei der fahrzeugeigene KommunikationsBus, wie CAN , LIN o.ä. als Kommunikationsverbindung genutzt wird,
- Bluetooth,
- WLAN,
- USB,
- LAN,
- UMTS oder ähnliches.

Es ist auch möglich, den Adapter mit weiteren Sensoren zu versehen, die eine universelle und sichere Nutzung zusätzlich sicherstellen. Hier sei ein Temperatursensor genannt, der zur Ermittlung der Temperatur des Adapters oder auch zur Ermittlung der Umgebungstemperatur dient. Auch eine Akkuüberwachung, d.h. eine Messung des Rest-Ladezustandes des adaptereigenen Akkus kann von Vorteil sein. Dies wurde bereits oben bei der Beschreibung des Verfahrensteiles der Erfindung beschrieben. Auch die Integration einer Schaltsensorik ist möglich.

Als Informationsquellen stehen zum einen die Steuergeräte des Fahrzeuges selbst zur Verfügung. Von diesen werden Ausgabewerte oder Funktionen oder Reaktionen als Informationsquelle genutzt.

Weitere Informationsquellen können für den Adapter externe Sensoren zur Verfügung. Damit wird es möglich, fahrzeuginterne Steuergeräte oder Sensoren, über die bekannten Kommunikationsverbindungen abzufragen. Aber auch Werte von externen Diagnoseeinrichtungen oder externer Prüfstände oder Sensoren können auf den Adapter übertragen werden. Hierfür bieten sich herkömmliche drahtlose Verbindungen, wie WLAN, UMTS oder Bluetooth an. Aber auch eine Drahtverbindung, beispielsweise über USB oder LAN ist hierbei möglich.

Durch die vorliegende Erfindung wird es möglich, mechanische, hydraulische, pneumatische, elektrische und elektromechanische Komponenten und Systeme auf ihre Ausführung, ihren Zustand, ihre Funktion und ihre Wirkung zu prüfen.

Auch wird es durch die Erfindung erstmalig möglich, dass der Sachverständige, insbesondere bei der durchzuführenden Hauptuntersuchung (Periodical Technical Inspection), neben der visuell-physischen Kontrolle auch ein Gerät (Adapter) einsetzen kann, mit dem die Prüfung wesentlich schneller und sicherer durchgeführt werden kann.

In einer Ausgestaltung der Erfindung ist vorgesehen, dass die mit der ausgewählten Informationsquelle in Wirkungsverbindung stehende Fahrzeugkomponente für die Bereitstellung von Information in der Informationsquelle angeregt wird. So kann beispielsweise ein Bremsdrucksensor als Informationsquelle dienen. Damit der Bremsdrucksensor ein Datum zur Verfügung stellt, wird die Fahrzeugkomponente Bremse oder eine andere einen Bremsdruck bewirkende Fahrzeugkomponente aktiviert.

Es ist aber in einer weiteren Ausführungsvariante der Erfindung alternativ oder zusätzlich vorgesehen, dass die Informationssenke mit einer fahrzeugexternen Informationsquelle verbunden wird. Um bei dem Beispiel des Bremsensensors zu bleiben, können dessen Werte auch ins Verhältnis zu externen Sensorwerten, beispielweise die eines Bremsenprüfstandes, gesetzt werden. Hierbei werden auch die verschieden Arten der Kommunikationsverbindungen deutlich. Während der Adapter "weiß", dass er sich mit dem Bremsdrucksensor über einen Fahrzeugbus verbinden muss, kommuniziert er mit dem Bremsenprüfstand über eine drahtlose Verbindung. Die Analyse selbst kann dann direkt in dem Adapter vollzogen werden. Er kann sich jedoch auch oder zusätzlich über eine ebenfalls für ihn bekannte Verbindungsmöglichkeit mit einem weiteren Rechner oder einer anderen Analyseeinheit verbinden.

Es ist in einer weiteren Ausführungsvariante der Erfindung vorgesehen, dass Parameter des Fahrzeuges und/oder der Informationsquellen, die die Untersuchung beeinflussen, vom Adapter gemessen und mit Sollwerten verglichen werden und daraus eine Meldung eines kritischen Zustandes generiert und behandelt wird.

In einer weiteren Ausgestaltung der Erfindung ist vorgesehen, dass über eine Schnittstelle ein Steuergerät einer im Fahrzeug verbauten Fahrzeugkomponente adressiert wird, an dieses Abfragebefehle übermittelt und daraus resultierende Reaktionssignale innerhalb von Prüfsequenzen verarbeitet werden. Wie bereits erwähnt, müssen Informationsquelle mit Daten versorgt werden, wozu diese Ausführungsvariante dient.

In einer weiteren Ausgestaltung des erfindungsgemäßen Verfahrens ist vorgesehen, dass vorteilhafterweise auch die Fahrzeug-Diagnose-Schnittstelle genutzt wird, indem die Kommunikation über eine Fahrzeug-Diagnose-Schnittstelle durchgeführt wird. Wie bereits erwähnt, wird die Fahrzeug-Diagnose-Schnittstelle normalerweise genutzt, um in der Vergangenheit gespeicherte Daten von Steuergeräten auszulesen. Die Erfindung nutzt nun die Fahrzeug-Diagnose-Schnittstelle in neuartiger Weise zum Erregen von Steuergeräten, und/oder zum Empfangen von Daten von den Steuergeräten als Informationsquelle.

In einer weiteren Ausgestaltung der Erfindung ist vorgesehen, dass in dem Adapter jeweils für mehrere Fahrzeugtypen
- eine Verbau-Datei, die eine Information über die fahrzeugtypspezifisch möglichen Fahrzeugkomponenten, zumindest in Form von Verweisen auf relevante Steuergeräte und Abfragebefehle einschließlich der Bewertung deren interpretierten Reaktionssignale, beinhaltet,
- eine Ablaufbeschreibungsdatei, die neben einer Referenz auf die Verbau-Datei eine Beschreibung aller für den Fahrzeugtyp verfügbaren Prüfsequenzen enthält,
- eine Steuergeräte-Beschreibungsdatei, die Parameter der Kommunikation mit den Steuergeräten der Fahrzeugkomponenten, jeweils steuergerätevariantenabhängig die durch die Verbau-Datei bzw. Ablaufbeschreibungsdatei referenzierten Abfragebefehle, einschließlich der Interpretation derer Reaktionssignale, sowie Regeln zur Erkennung der jeweiligen Steuergerätevariante beinhaltet,
- eine Protokollbeschreibungsdatei, die zur Ablage von über die Steuergerätebeschreibungsdateien übergreifenden Informationen dient,
gespeichert wird.

Bei der Prüfung eines Fahrzeuges wird von einem externen Rechner an den Adapter eine den Fahrzeugtyp kennzeichnende Information sowie eine Liste der zu prüfenden Fahrzeugkomponenten übermittelt. Dieser externe Rechner kann beispielsweise ein PDA (Personal Digital Assistent) darstellen. Dabei kann dieser PDA auch als Benutzeroberfläche für den Adapter dienen. Der Adapter kann damit beispielsweise im Fahrzeuginnenraum verbleiben und über den PDA von außen mobil bedient werden. Der PDA selbst kann von einem PC oder einem Laptop unterstützt werden.

Es ist aber auch möglich, dass der externe Rechner durch einen PC oder einen Laptop gebildet wird. Auch dabei kann eine Bedienoberfläche auf diesen Rechnern realisiert werden.

Der Adapter wird mit der Fahrzeug-Diagnose-Schnittstelle verbunden. Aus der den Fahrzeugtyp kennzeichnenden Information und der Liste der zu prüfenden Fahrzeugkomponenten wird mittels Verbau-Datei, Ablaufbeschreibungsdatei und einer ersten und einer zweiten Steuergeräte-Beschreibungsdatei und einer ersten und einer zweiten Protokollbeschreibungsdatei jede der zu prüfenden Fahrzeugkomponenten auf Verbau geprüft. Nach erfolgreicher Verbauprüfung können die Fahrzeugkomponenten mittels der in der Ablaufbeschreibungsdatei enthaltenen Prüfsequenzen geprüft werden. Die Ergebnisdaten einschließlich der Reaktionssignale werden in dem Adapter gespeichert.

Die Steuergeräte der zu prüfenden Komponenten werden somit direkt angesprochen. Hierbei ist die aktuelle Reaktion auf einen Abfragebefehl und möglicherweise deren Wert von Interesse.

Üblicherweise sind die Steuergeräte innerhalb eines Fahrzeugs über einen Bus miteinander verbunden und kommunizieren über diesen Bus. Nun kann es möglich sein, dass einer fahrzeugseitigen Schnittstelle mehrere Busse angeschlossen sind, die verschiedene Busprotokolle aufweisen, z.B. CAN, LIN oder ähnliches. Der Adapter kann nun so ausgestaltet werden, dass er über die Schnittstelle die verschiedenen Busse unterstützt. Dies kann selbsterkennend geschehen oder über die Steuergerätebeschreibungsdatei realisiert werden. Weiterhin ist es möglich, dass über die Schnittstelle mit mehreren Steuergeräten über ein und denselben Busse oder verschiedene Busse parallel kommuniziert wird. Das ist insbesondere dann von Vorteil, wenn bei bestimmten Funktionen mehrere Steuergeräte beteiligt sind. So kann deren Zusammenwirken in Echtzeit getestet werden.

Dadurch, dass die Ablaufbeschreibungsdatei auch eine Beschreibung aller für den Fahrzeugtyp verfügbaren Prüfsequenzen enthält, ist es möglich, dass nach Fahrzeugauswahl durch den Sachverständigen und Fahrzeugerkennung, gegebenenfalls in Verbindung mit der Verbauprüfung, dem Sachverständigen nur die Prüfsequenzen angeboten werden, die möglich oder auch sicher sind. So wird es möglich, das Prüfungsangebot bei Variantendifferenzen oder bei Komfortfunktionen, die keinen sicherheitstechnischen Aspekt aufweisen, auf sicherheitsrelevante Prüfsequenzen zu beschränken.

Um zu verhindern, dass der Datenverkehr zwischen der Schnittstelle und dem Adapter mitgelesen werden kann, was ja zu einer Kenntnis über herstellerinterne Daten oder zur Manipulation führen kann, kann vorgesehen werden, den Datenverkehr über an sich bekannte Verschlüsselungsverfahren zu verschlüsseln.

Auch kann eine Datenverschlüsselung genutzt werden, um die Daten verschlüsselt zu speichern, um dadurch zu verhindern, dass diese unbefugt ausgelesen werden können.

Mit einer Variante des erfindungsgemäßen Verfahrens kann eine Prüfung als Verbauprüfung durchgeführt werden. Dabei werden mittels der Verbau-Datei, der Ablaufbeschreibungsdatei und den Steuergeräte- und Protokollbeschreibungsdateien Steuergeräte der in der Liste der zu prüfenden Fahrzeugkomponenten verzeichneten Fahrzeugkomponenten adressiert. An diese werden Abfragebefehle ausgegeben und die daraufhin von dem jeweiligen Steuergerät empfangenen Reaktionssignale werden gesammelt, und mit Sollwerten verglichen. Bei Übereinstimmung wird die Information gewonnen, dass die entsprechende Fahrzeugkomponente in dem Fahrzeug verbaut worden ist. In Abhängigkeit des Verbauzustandes einzelner Fahrzeugkomponenten und des Vorhandenseins erforderlicher Steuergerätevarianten wird als Abschluss der Verbauprüfung durch den Adapter ermittelt, welche der den Fahrzeugkomponenten zugeordneten, weitergehenden Prüfsequenzen ausführbar sind. Das Ergebnis der Verbauprüfung wird auf dem Adapter in dessen Speicher hinterlegt, so dass dieses erneut abgerufen werden kann, ohne erneut eine Verbauprüfung durchführen zu müssen.

Grundsätzlich ist es möglich, die Reaktionssignale zu speichern, um diese wiederverwenden zu können und die Steuergeräte bei einer späteren Prüfsequenz, wo diese Reaktionssignale - vielleicht in anderem Zusammenhang - benötigt werden nicht noch einmal ansprechen zu müssen.

In einer Variante des Verfahrens ist vorgesehen, dass bei der Prüfung der Name der zugehörigen Ablaufbeschreibungsdatei als den Fahrzeugtyp kennzeichnende Information an den Adapter übertragen wird. Damit wird dem Adapter vermittelt, wie die Kommunikation über die OBD-Schnittstelle für das zu prüfende Fahrzeug zu gestalten ist.

Zur Identifizierung des Prüfvorganges wird weiterhin zu Beginn der Prüfung die Fahrzeugidentifikationsnummer übertragen und mit dem als Reaktionssignal eines Steuergerätes empfangenen Wert verglichen. Das ermöglicht weiterhin, dass das Ergebnis der Verbauprüfung unter Verwendung der Fahrzeugidentifikationsnummer gespeichert wird und damit bei einer weiteren Prüfung sofort wieder zur Verfügung steht.

Die Fahrzeughersteller verwenden über den Produktionszeitraum in Abhängigkeit der Fahrzeugausstattung unterschiedliche Varianten von Steuergeräten und wechseln zudem im Lebenszyklus eines Fahrzeugs nicht selten die Software in den Steuergeräten über ein Upgrade aus. Damit der Prüfvorgang auch bei unterschiedlichen Varianten durchgeführt werden kann, ist in einer weiteren Ausgestaltung des Verfahrens vorgesehen, dass in der Steuergeräte-Beschreibungsdatei Varianten von Steuergeräten unter Angabe der variierten Abfragebefehle einschließlich der Interpretation der Reaktionssignale und Regeln zur Erkennung der Steuergerätevarianten gespeichert werden.

Da die Varianten der Steuergeräte-Software ständig weiterentwickelt und unabhängig von einer Prüfung zur Fahrzeugzustandsuntersuchung eingestellt werden, kann eine Aktualisierung der in dem Adapter gespeicherten Daten mittels eines externen Rechners durchgeführt werden. Dieser externe Rechner kann beispielsweise der Laptop des prüfenden Sachverständigen (Prüftechnischer Ingenieur PTI) sein, der vorher aus einer zentralen Quelle eine Aktualisierung der Daten auf seinem Laptop vorgenommen hat und diese Aktualisierung auf den Adapter weitergibt.

Bei Speicherung von Varianten kann auch eine automatische Variantenwahl vorgenommen werden, indem eine anfängliche Prüfung als Variantenprüfung als Bestandteil der Verbauprüfung durchgeführt wird. Dazu sind in der Steuergeräte-Beschreibungsdatei Regeln zur Erkennung der jeweiligen Steuergerätevariante enthalten. Dabei werden die Steuergeräte der Fahrzeugkomponenten adressiert und an diese Steuergeräte einer Variantenabfrage entsprechende Abfragebefehle ausgegeben. Die daraufhin empfangenen Reaktionssignale der Steuergeräte werden mit Sollwerten verglichen und nachfolgend wird die Information gewonnen, welche Variante der Steuergeräte vorhanden ist. Diese wird in allen weiteren Prüfungen verwendet.

Neben der Verbauprüfung kann es für einige Komponenten erforderlich sein, deren Funktionssicherheit zu prüfen. Hierzu kann eine Prüfung als Funktions- und Wirkprüfung durchgeführt werden. Dabei werden aufbauend auf den im Rahmen der Verbauprüfung erkannten Steuergerätevarianten, Steuergeräte einer Fahrzeugkomponente adressiert, in der Ablaufbeschreibungsdatei referenzierte Abfragebefehle ausgegeben und empfangene Reaktionssignale einer Plausibilitätsprüfung unterzogen.

Zur Steigerung der Geschwindigkeit der Prüfung ist es zweckmäßig, dass die Reihenfolge der Prozessschritte so gewählt wird, dass jedes Steuergerät während der Verbauprüfung nur einmal adressiert wird.

Weiterhin werden der Adapter und seine Anschluss- und Umgebungsbedingungen vor einer Prüfung oder während der Prüfung danach eingeschätzt, ob seine volle Funktionsfähigkeit gegeben ist. Hierzu werden zumindest die Parameter des Fahrzeuges und/oder des Adapters, die die Prüfung beeinflussen, überprüft und mit Sollwerten verglichen und daraus wird gegebenenfalls eine Meldung eines kritischen Zustandes generiert und behandelt.

Hierzu ist in dem Adapter ein Analog-Digital-Umsetzer (ADU) vorgesehen. Mit diesem können analoge Werte in digitale Werte umgesetzt und sodann entsprechend ausgewertet werden. Im einfachsten Fall wird es damit möglich, zu überwachen, ob der Adapter überhaupt an das Fahrzeug angeschlossen ist. Hierfür kann eine signifikante Größe des Fahrzeugs, beispielsweise die Bordspannung, verwendet werden. Wird diese über den ADU durch den Adapter festgestellt, kann davon ausgegangen werden, dass der Adapter mit dem Fahrzeug verbunden ist. In gleicher Weise kann festgestellt werden, ob die Zündung des Fahrzeugs eingeschaltet ist, was für einige Prüfungen zwingend erforderlich ist.

Aber auch der Wert der signifikanten Größe kann über den ADU ausgewertet werden. So wird es möglich, beispielsweise die Bordspannung nicht nur auf ihr Vorhandensein hin zu überprüfen sondern auch deren Größe zu ermitteln, um daraus weitere Auswertungen vorzunehmen. Auch Temperaturwerte des Fahrzeuges können hier mit einbezogen werden.

Das Verfahren sieht nach der obenstehenden Ausgestaltung aber auch die Überprüfung adaptereigener Werte vor. So kann eine interne Spannungsüberprüfung des adaptereigenen Akkus erfolgen. Auch hier würde die Akkuspannung mittels eines ADU als digitaler Wert ermittelt werden. Unterschreitet dann beispielsweise die Akkuspannung einen bestimmten Wert, kann beispielsweise der Adapter für die Ausführung seiner Funktion gesperrt werden. In gleicher Weise kann auch die Temperatur des Adapters selbst überwacht werden, um beispielsweise Überhitzungszustände festzustellen, die die Funktion beeinträchtigen können.

Es können aber auch direkt als digitale Werte vorliegende Größen ausgewertet werden. So ist es möglich, das Speichervolumen des Adapters zu überwachen. Im allgemeinen wird eine Speicherkarte in den Adapter eingesetzt werden und hier könnte festgestellt werden, ob das vorhandene Speichervolumen für eine ordnungsgemäße Funktion noch ausreichend ist.

Digitale Werte werden aber auch durch eine Verbindung des Adapters mit einem Hostrechner generiert, beispielsweise als ein Handshake-Signal. Dieses kann dann zum Zwecke der Auswertung einer Hostverbindung verwendet werden.

Die Überwachung kritischer Zustände kann parallel zu dem Prüfvorgang durchgeführt werden, insbesondere die Überwachung kritischer Zustände aus den o.g. Werteermittlungen. Eine Behandlung eines kritischen Zustandes, die nach dessen Feststellung geschehen kann, wird in der einfachsten Art und Weise zu einer Absetzung einer Warnmeldung genutzt.

Ein Signal für das Erreichen eines kritischen Zustandes kann für die Auslösung eines kontrollierten Beendens einer Diagnosesitzung verwendet werden. Aber auch eine Sicherheitsabschaltung kann damit realisiert werden.

Die anordnungsseitige Lösung der Aufgabenstellung besteht darin, dass ein Adapter, mit einem mit einer Informationsquelle verbindbaren Interface versehen ist, einen Speicher zum Speichern von Konfigurationen einer Verbindung zur Kommunikation mit der Informationsquelle, und einem Mittel zur Auswahl einer verbindbaren Informationsquelle, bestehend aus Steuergeräten des Fahrzeugs, einer Fahrzeug-Diagnose-Schnittstelle, einer EBS-CAN-Schnittstelle, einer Anhänger-Licht-Steckdose, Sensoren auf dem Adapter, Sensoren außerhalb des Adapters, einer externen Diagnoseeinrichtung oder einem externen Prüfstand, die mit Fahrzeugkomponenten in Wirkungsverbindung stehen und deren jeweilige Konfiguration bekannt ist, aufweist. Damit kann der Adapter zum Zwecke der Auswahl und der Datenkommunikation direkt mit der Informationsquelle kommunizieren, um Daten zu erhalten und an eine Informationssenke zum Zwecke der Analyse weiter zu leiten. Zu diesem Zwecke ist es auch möglich, dass der Adapter mit einem Speicher zum Speichern von Konfigurationen von Verbindungen mit Informationssenken ausgestattet ist. Diese können dann in ähnlicher Art und Weise wie die Informationsquellen ausgewählt werden, um an diese die Daten zur Analyse zu liefern. Für einige Daten kann der Adapter selbst auch Informationssenke zur Analyse sein.

In einer Ausgestaltung der Erfindung ist vorgesehen, dass der Adapter Mittel zum Speichern von Prüfsequenzen und Reaktionssignalen von Steuergeräten eines Fahrzeuges aufweist. Damit können Fahrzeugsysteme angeregt und zur Ausgabe von Reaktionssignalen bewegt werden, die analysiert werden können.

Eine Ausgestaltung des Adapters besteht darin, dass der Adapter mit einem oder mehreren Speichern zum Speichern jeweils für mehrere Fahrzeugtypen
- einer Verbau-Datei, die eine Information über die fahrzeugtypspezifisch möglichen Fahrzeugkomponenten, zumindest in Form von Verweisen auf relevante Steuergeräte und Abfragebefehle, einschließlich der Bewertung deren interpretierten Reaktionssignale beinhaltet,
- einer Ablaufbeschreibungsdatei, die neben einer Referenz auf die Verbau-Datei eine Beschreibung aller für den Fahrzeugtyp verfügbaren Prüfsequenzen enthält,
- einer ersten und einer zweiten Steuergeräte-Beschreibungsdatei, die Parameter der Kommunikation mit den Steuergeräten der Fahrzeugkomponenten jeweils steuergerätevariantenabhängig die durch die Verbau-Datei bzw. Ablaufbeschreibungsdatei referenzierten Abfragebefehle einschließlich der Interpretation der Reaktionssignale sowie Regeln zur Erkennung der jeweiligen Steuergerätevariante beinhaltet,
- einer ersten und einer zweiten Protokollbeschreibungsdatei, die zur Ablage von über die Steuergerätebeschreibungsdateien übergreifenden Informationen dient,
versehen ist.

Weiterhin weist der Adapter einen Prozessor auf und ist mit einer Schnittstelle für einen externen Rechner versehen. Der Prozessor ist zumindest mit der Schnittstelle, dem oder den Speichern und dem Interface verbunden ist. Das Interface ist mittels des Prozessors und des oder der Speicher an die Konfiguration der Fahrzeug-Diagnose-Schnittstelle des zu prüfenden Fahrzeuges einstellbar. Das kann beispielsweise mittels eines Multiplexers erfolgen, der von dem Prozessor angesteuert wird und dem zu prüfenden Fahrzeug entsprechend die Schnittstellenkonfiguration einstellt. Dies ist erforderlich, da sich in praxi noch keine Standard-Konfigurationen durchgesetzt haben. So ist die Schnittstelle zwar physisch in aller Regel von Fahrzeug zu Fahrzeug gleich, deren Belegung jedoch nicht. Die (unterschiedliche) Belegung kann über den genannten Multiplexer eingestellt werden.

Zur Überprüfung der funktionsbestimmenden Parameter bezüglich Anschluss- und Umgebungsbedingungen kann der Adapter mit Mitteln zur Messung von Parametern des Fahrzeuges und/oder des Adapters, die die Prüfung beeinflussen, und mit Mitteln zur prozessorverarbeitbaren Umsetzung dieser Parameter versehen sein. Wird beispielsweise der Adapter über die OBD-Schnittstelle an das Bordnetz des zu prüfenden Fahrzeuges angeschlossen, kann es zweckmäßig sein, über einen Analog/Digital-Umsetzer die Bordspannung zu überprüfen, da bei einer zu geringen Bordspannung möglicherweise einige Steuergeräte eine Fehlfunktion zeigen, obwohl sie bei richtiger Bordspannung vollständig funktionieren würden. In dem Falle könnte die Messung einer nicht ausreichenden Bordspannung dazu genutzt werden, den Prüfvorgang zu unterbrechen, um zu vermeiden, dass ein fehlerhaftes Prüfergebnis ausgegeben wird.

Es ist auch möglich, den Adapter mit weiteren Sensoren zu versehen, die eine universelle und sichere Nutzung zusätzlich sicherstellen. Hier sei ein Temperatursensor genannt, der zur Ermittlung der Temperatur des Adapters oder auch zur Ermittlung der Umgebungstemperatur dient. Auch eine Akkuüberwachung, d.h. eine Messung des Rest-Ladezustandes des adaptereigenen Akkus, kann von Vorteil sein. Dies wurde bereits oben bei der Beschreibung des Verfahrensteiles der Erfindung beschrieben. Auch die Integration einer Schaltsensorik ist möglich.

Schließlich kann der Anwendungsbereich des Adapters erheblich erweitert werden, wenn ein Beschleunigungssensor, vorzugsweise ein 3-D-Beschleunigungssensor und/oder ein Drehratesensor, vorzugsweise ein 3-D-Drehratesensor integriert wird. Dadurch wird es möglich, mit dem Adapter physisch-dynamische Prüfungen, wie beispielsweise eine Bremsreferenzprüfung oder eine Aufbauschwingungsprüfung, durchzuführen.

Eine weitere Möglichkeit der Nutzungserweiterung besteht darin, dass für den Adapter externe Sensoren abgefragt werden. Damit wird es möglich, fahrzeuginterne Sensoren, insbesondere über den Fahrzeug-Kommunikationsbus abzufragen. Aber auch Werte von externen Diagnoseeinrichtungen oder externer Prüfstände oder Sensoren können auf den Adapter übertragen werden. Hierfür bieten sich herkömmliche drahtlose Verbindungen, wie WLAN, UMTS oder Bluetooth an. Aber auch eine Drahtverbindung, beispielsweise über USB oder LAN ist hierbei möglich.

Somit wird es auch möglich, beispielsweise zur Überprüfung eines Geräuschpegels oder einer bestimmter Geräuschkulisse im Fahrgastraum oder außerhalb dessen ein Mikrophon als externen Sensor an den Adapter anzuschließen. Beispielsweise können aufgenommene aktuelle Geräuschbilder zum Vergleich mit Soll-Geräuschbildern verwendet werden. Abweichungen beider Geräuschbilder voneinander sind meist signifikant für bestimmte Fehler- oder Verschleißarten oder falsche Bauteile, wie beispielsweise nicht zugelassene Schalldämpfer. Mit dem Adapter kann damit auch ein Hinweis auf Fehler oder Verschleißzustände oder nicht zulässige Bauteile gewonnen werden.

Um zu vermeiden, dass der Adapter von der Bordspannung abhängig ist, ist es zweckmäßig, den Adapter mit einer eigenen Stromversorgung zu versehen.

Mittels des Adapters ist es auch möglich, die Funktionen eines Zugfahrzeug-Hänger-Gespanns zu überprüfen. Hierzu wird ein Truck-Trailer-Interface vorgesehen, das ein Erweiterungsgerät für den Adapter darstellt. Der Adapter wird mit dem Zugfahrzeug verbunden. Damit ist aber normalerweise nicht automatisch eine Verbindung zu den Steuergeräten des Hängers verbunden. Das Truck-Trailer-Interface wird sodann zwischen Zugfahrzeug und Hänger geschalten. Es übernimmt damit die Sende- und Empfangsfunktionen, die der Adapter für das Zugfahrzeug hat. Zur Steuerung und zum Empfang von Daten ist dann der Adapter mit dem Interface über ein OBD-Interface, über Bluetooth, über WLAN, über USB, über LAN oder über UMTS verbunden. Das Truck-Trailer-Interface hat einen eigenen Prozessor.

Die Erfindung soll nachfolgend anhand eines Ausführungsbeispieles näher erläutert werden.

In den zugehörigen Zeichnungen zeigt
Fig. 1 eine schematische Darstellung einer erfindungsgemäßen Anordnung,
Fig. 2 schematische Darstellung des Updatevorgangs,
Fig. 3 schematische Darstellung der Bedatung des PDA vor der Prüfung,
Fig. 4 schematische Darstellung der Bedienung des Adapters durch den PDA,
Fig. 5 eine schematische Darstellung der Ergebnisbildung bei der Hauptuntersuchung,
Fig. 6 eine schematische Darstellung einer dynamischen Bremsenprüfung mit adaptereigenen Sensoren,
Fig. 7 eine schematische Darstellung einer quasistatischen Bremsenprüfung und
Fig. 8 eine schematische Darstellung einer Stoßdämpferprüfung mit dem Adapter.

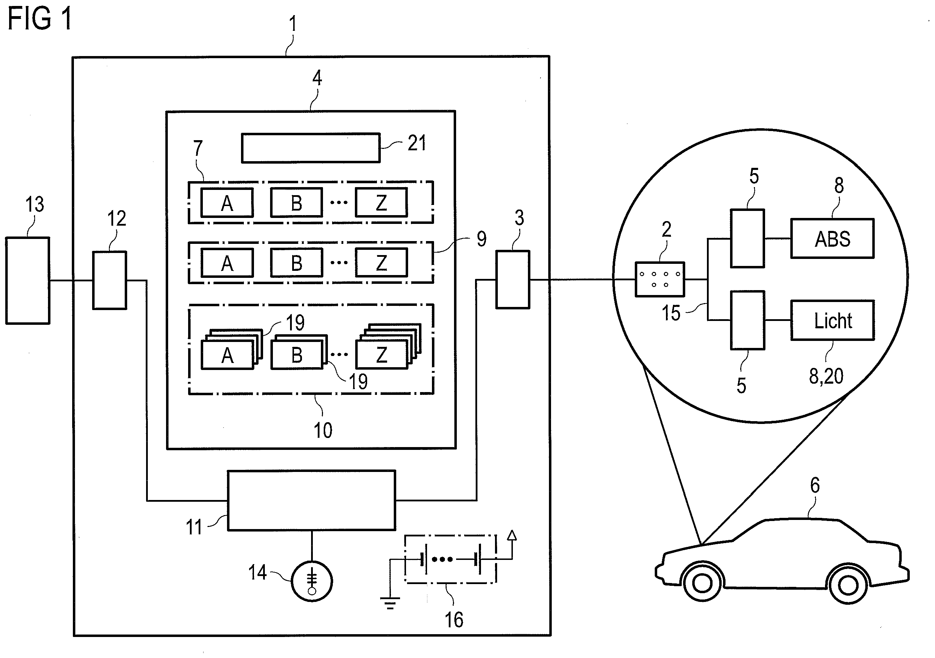

Wie in Fig. 1 dargestellt, weist die Anordnung zur Fahrzeugzustandsuntersuchung eines Fahrzeuges einen Adapter 1 auf, der mit einem an eine Fahrzeug-Diagnose-Schnittstelle 2 anschließbaren Interface 3 versehen ist und der einen Speicher 4 zum Speichern der für die Prüfung erforderlichen Daten und der aus der Prüfung resultierenden Ergebnisdaten einschließlich Reaktionssignalen aufweist. Dazu ist der Speicher 4 zum Speichern mehrerer Fahrzeugtypen A, B ...Z vorgesehen. Dieser Speicher 4, hält für alle prüfungsrelevanten Fahrzeugtypen A, B ...Z jeweils
- eine Verbau-Datei 7, die eine Information über die fahrzeugtypspezifisch möglichen Fahrzeugkomponenten 8, zumindest in Form von Referenzen auf die relevanten Steuergeräte 5 und Abfragebefehle einschließlich der Bewertung deren interpretierten Reaktionssignale, beinhaltet,
- eine Ablaufbeschreibungsdatei 9, die neben einer Referenz auf die Verbau-Datei 7 eine Beschreibung aller für den Fahrzeugtyp verfügbaren Prüfsequenzen enthält,
- eine erste und eine zweite Steuergerätebeschreibungsdatei 10, die Parameter der Kommunikation mit den Steuergeräten 5 der Fahrzeugkomponenten 8, jeweils steuergerätevariantenabhängig die durch die Verbau-Datei 7 bzw. Ablaufbeschreibungsdatei 9 referenzierten Abfragebefehle einschließlich der Interpretation deren Reaktionssignale, sowie Regularien zur Erkennung der jeweiligen Steuergerätevariante beinhaltet,
- eine erste und eine zweite Protokollbeschreibungsdatei 21, die zur Ablage von über die Steuergerätebeschreibungsdateien übergreifenden Informationen dient,
vor.

Weiterhin weist der Adapter 1 einen Prozessor 11 auf und ist mit einer Schnittstelle 12 für einen externen Rechner 13 versehen. Der Prozessor 11 ist mit der Schnittstelle 12, dem oder den Speichern 4 und dem Interface 3 verbunden.

Das Interface 3 ist mittels des externen Rechners 13, 17 und des oder der Speicher 4 an die Konfiguration der Fahrzeug-Diagnose-Schnittstelle 2 des zu prüfenden Fahrzeuges 6 einstellbar.

Der Adapter 1 ist mit Mitteln zur Messung von funktionsbestimmenden Parametern des Fahrzeuges 6 und/oder des Adapters 1, die die Prüfung beeinflussen, und mit Mitteln zur Prozessor-verarbeitbaren Umsetzung dieser Parameter versehen. Letzteres wird durch den Prozessor 11 realisiert. Die Mittel zur Messung der Parameter des Adapters sind beispielhaft durch einen Temperatursensor 14 symbolisiert. Eigenschaften des Fahrzeugs 6, wie beispielsweise die Bordspannung werden über das Interface 3 der Fahrzeug-Diagnose-Schnittstelle 2 unter Einsatz eines Analog-/ Digitalumsetzers entnommen.

Die Steuergeräte 5 innerhalb eines Fahrzeugs sind über einen Bus 15 miteinander verbunden und kommunizieren über diesen Bus 15.

Der Adapter 1 ist mit einer eigenen Stromversorgung 16 versehen.

Zur Fahrzeugzustandsüberwachung eines Fahrzeuges 6, erfolgt eine Prüfung, bei der über eine Fahrzeug-Diagnose-Schnittstelle 2, beispielsweise eine OBD-Schnittstelle, Steuergeräte 5 der im Fahrzeug 6 verbauten Fahrzeugkomponenten adressiert werden. An diese werden Abfragebefehle übermittelt und daraus resultierende Reaktionssignale entgegengenommen und vom Adapter bewertet und protokolliert. Hierzu wird die anfängliche Speicherbelegung genutzt, wie nachfolgend ausgeführt wird.

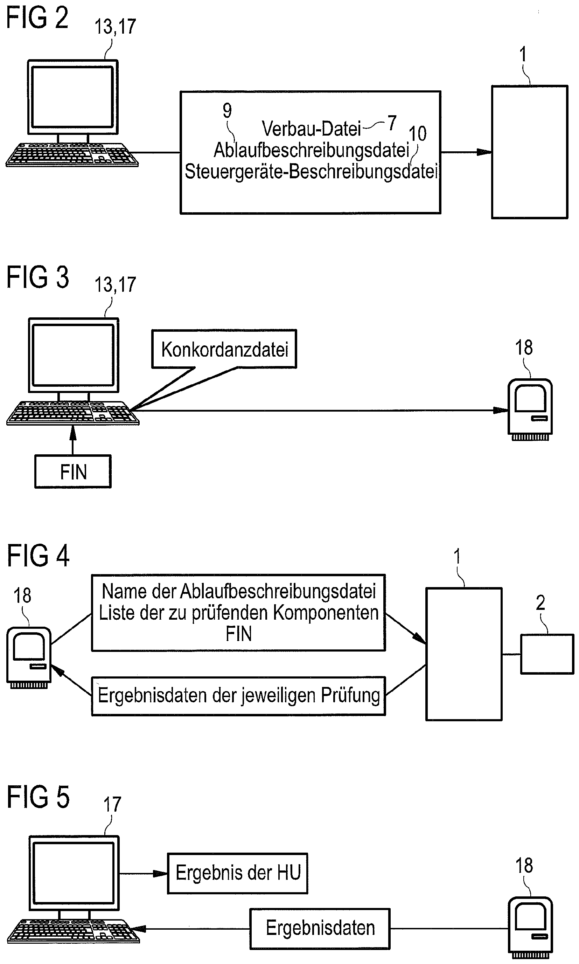

Bei der anfänglichen Speicherbelegung (Updatevorgang) des Adapters 1, die in Fig. 2 dargestellt ist, wird ein externer Rechner 13, der auch durch einen Prüfrechner 17, d.h. ein PC oder ein Laptop des Sachverständigen gebildet werden kann, über eine Schnittstelle, in der Regel über eine USB-Schnittstelle mit dem Adapter 1 verbunden. Dabei werden in den Speicher 4 jeweils für mehrere Fahrzeugtypen A,B, ...Z die Verbau-Datei 7, die Ablaufbeschreibungsdatei 9, die Steuergeräte-Beschreibungsdateien 10 mit ihren Varianten 19 und Protokollbeschreibungsdateien 21 geschrieben.

Zu Beginn der Prüfung, wie in Fig. 3 dargestellt, wird hierzu sozusagen zwischen den Prüfrechner 17 und den Adapter 1 ein PDA 18 geschaltet. Dieser übernimmt dann die Funktion eines Bedienterminals, wie dies in Fig. 4 dargestellt ist, wodurch vermieden werden kann, dass der Adapter 1 selbst ein Bedienterminal aufweisen muss. Der PDA 18 übernimmt dann auch die Funktion des externen Rechners 13, d.h. der externe Rechner 13 braucht nicht mehr mit dem Adapter verbunden sein. Durch ihn erfolgt die Übermittlung der den Fahrzeugtyp A,B, ...Z kennzeichnenden Information sowie einer Liste der zu prüfenden Fahrzeugkomponenten 8. Dies geschieht in der Art, dass in dem Prüfrechner 17 eine Konkordanzdatei hinterlegt ist, mittels derer unter anderem aus der Fahrzeugidentifikationsnummer FIN des Fahrzeugs 6 die den Fahrzeugtyp A,B, ...Z kennzeichnende Information in Form des Namens der entsprechenden Ablaufbeschreibungsdatei 9 herausgelesen werden kann. Mittels der Konkordanzdatei wird in dem Prüfrechner 17 auch bestimmt, welche Fahrzeugkomponenten in dem Fahrzeug 6 verbaut sein müssten. Der Name der Ablaufbeschreibungsdatei 9, die Liste der zu prüfenden Fahrzeugkomponenten 8 und die FIN wird jeweils für die zu prüfenden Fahrzeuge an den PDA 18 übergeben. Danach kann der PDA 18 von dem Prüfrechner 17 getrennt und mit dem Adapter 1 verbunden werden, um mobil einsetzbar zu sein. Der PDA 18 gibt nach Auswahl durch den Sachverständigen die Information für das zu prüfende Fahrzeug an den Adapter 1.

Der Adapter 1 wurde zuvor mit der Fahrzeug-Diagnose-Schnittstelle 2 verbunden.

Aus dem Namen der Ablaufbeschreibungsdatei 9 und der Liste der zu prüfenden Fahrzeugkomponenten 8, werden die relevanten Informationen aus der Verbau-Datei 7, den Steuergeräte- und Protokollbeschreibungsdateien und der Ablaufbeschreibungsdatei 9 selektiert. Die relevanten Steuergeräte 5 der zu prüfenden Fahrzeugkomponenten 8 werden adressiert, deren Varianten bestimmt und die Abfragebefehle zur Sicherstellung des Verbaus der Fahrzeugkomponenten 8 ausgegeben. Die Reaktionssignale der Steuergeräte 5 werden in dem Adapter 1 gesammelt und nachdem alle notwendigen Reaktionssignale vorliegen, werden diese mit Sollwerten verglichen. Bei Übereinstimmung wird die Information gewonnen, dass die entsprechenden Fahrzeugkomponenten 8 in dem Fahrzeug 6 verbaut worden sind. In Abhängigkeit des Verbauzustandes einzelner Fahrzeugkomponenten 8 und des Vorhandenseins erforderlicher Steuergerätevarianten wird als Abschluss der Verbauprüfung durch den Adapter 1 ermittelt, welche der den Fahrzeugkomponenten 8 zugeordneten, weitergehenden Prüfsequenzen ausführbar sind. Das Ergebnis der Verbauprüfung wird auf dem Adapter 1 in dessen Speicher 4 hinterlegt, so dass dieses erneut abgerufen werden kann, ohne erneut eine Verbauprüfung durchführen zu müssen.

Hierfür dient die Übermittlung der FIN an den Adapter 1, da unter dem Namen mit der FIN diese Ergebnisdaten einschließlich Reaktionssignale abgelegt werden.

Wie in Fig. 1 ebenfalls dargestellt, werden in der Steuergerätebeschreibungsdatei 10 Steuergerätevarianten 19 unter Angabe deren spezifischer Abfragebefehle einschließlich der Interpretation der Reaktionssignale und Variantenerkennungsregularien gespeichert.

Zur Berücksichtigung der Steuergerätevarianten 19 bei der Prüfung wird im Rahmen der Verbauprüfung eine Variantenprüfung durchgeführt. Dazu wird ein Steuergerät 5 einer Fahrzeugkomponente 8 adressiert, an dieses Steuergerät 5 werden einer Variantenabfrage entsprechende Abfragebefehle ausgegeben und die daraufhin empfangenen Reaktionssignale des Steuergerätes 5 mit Sollwerten verglichen. Für die anschließenden Prüfungen wird dann die Variante 19 gewählt, die dem Ergebnis der Variantenprüfung entspricht.

Anschließend werden die zur Sicherstellung des Verbaus der Fahrzeugkomponenten 8 notwendigen Abfragebefehle ausgegeben. Die daraufhin von den Steuergeräten 5 empfangenen Reaktionssignale werden gesammelt und nachdem alle notwendigen Reaktionssignale vorliegen, werden diese mit Sollwerten verglichen. Bei Übereinstimmung wird die Information gewonnen, dass die entsprechenden Fahrzeugkomponenten 8 in dem Fahrzeug 6 verbaut worden sind. In Abhängigkeit des Verbauzustandes einzelner Fahrzeugkomponenten 8 und des Vorhandenseins erforderlicher Steuergerätevarianten wird als Abschluss der Verbauprüfung durch den Adapter 1 ermittelt, welche der den Fahrzeugkomponenten 8 zugeordneten, weitergehenden Prüfsequenzen ausführbar sind. Das Ergebnis der Verbauprüfung wird auf dem Adapter 1 in dessen Speicher 4 hinterlegt, so dass dieses erneut abgerufen werden kann, ohne erneut eine Verbauprüfung durchführen zu müssen
Anschließend kann eine Funktions- und Wirkprüfung durchgeführt werden. Dabei werden wiederum Steuergeräte 5 einer Fahrzeugkomponente 8 adressiert. An diese Steuergeräte 5 werden Abfragebefehle ausgegeben. Beispielsweise kann an ein Lichtsystem 20 als Fahrzeugkomponente 8 im Rahmen einer Prüfsequenz ein Einschaltbefehl aus der Ablaufbeschreibungsdatei 9 unter Referenzierung eines entsprechenden Abfragebefehls ausgegeben werden. Als Reaktionssignal wird man dann entweder ein visuelles Reaktionssignal in der Form erhalten, dass die Fahrzeugbeleuchtung tatsächlich eingeschaltet wird, oder ein elektrisches Reaktionssignal in der Form, dass das Steuergerät 5 des Lichtsystems 20 zum Beispiel ein Statussignal als Reaktionssignal ausgibt. Ein solches Reaktionssignal wird dann ausgewertet, um zu der Aussage zu gelangen, dass die entsprechende Fahrzeugkomponente die richtige Funktion und Wirkung zeigt oder nicht.

Die Ergebnisdaten der einzelnen Prüfsequenzen einschließlich Verbauprüfung werden nach jeweiligem Abschluss an den PDA 18 übergeben und dort angezeigt.

Der Abschluss der Untersuchung ist in Fig. 5 dargestellt. Dabei wird wieder der PDA 18 mit dem Prüfrechner 17 verbunden und die Ergebnisdaten an den Prüfrechner 17 übergeben.

Parallel zur gesamten Prüfung werden die Anschluss- und Umgebungsbedingungen des Adapters 1 überwacht. Unter anderem wird die Temperatur des Adapters 1 mittels des Temperatursensors 14 ermittelt und mittels des Prozessors 11 einem Sollwertvergleich unterzogen. Übersteigt nämlich die Temperatur des Adapters 1 eine Maximaltemperatur, kann eine richtige Prüfung nicht mehr sichergestellt werden. In gleicher Weise können Unterschreitungen einer Sollbetriebsspannung zur Fehlfunktionen führen. Aus diesem Grunde wird mittels des Prozessors die aus der Fahrzeug-Diagnose-Schnittstelle gewonnene Bordspannung einer Messung unterzogen und mit einem Sollwert verglichen.

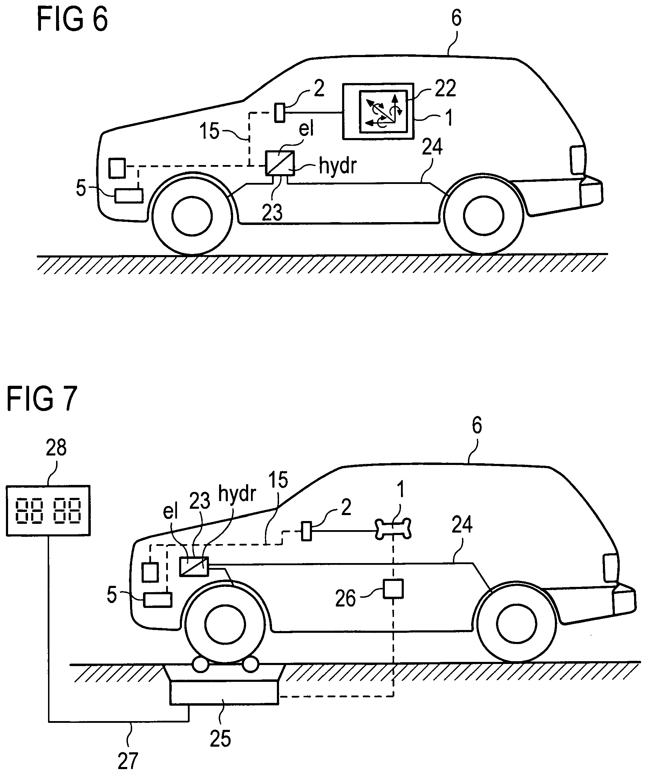

Wie in Fig. 6 und Fig. 7 dargestellt, werden nachfolgend zwei Beispiele für eine Bremsenprüfung auf der Grundlage von Referenzwerten beschrieben.

Bei einer dynamischen Bremsenprüfung, wie in Fig. 6 dargestellt, werden adaptereigene (adapterinterne) Sensoren 22 genutzt. Dabei wird das Fahrzeug während einer Probefahrt sehr stark verzögert. Während der Verzögerung nutzt der Adapter 1 die Fahrzeuginterne Sensorik in Form eines Steuergerätes 23, das den Bremsdruck auf der Bremsleitung 24 kontrolliert, und liest den Bremsdruck im Fahrzeug 6 kontinuierlich durch Absenden eines Abfragebefehls und Auswerten des jeweiligen Reaktionssignals aus.

Gleichzeitig wird die adapterinterne Sensorik genutzt, nämlich der 3D-Beschleunigungssensor 22, um die Verzögerung des Fahrzeugs 6 zu ermitteln.

Durch Auswertung und Vergleich des adapterinternen Sensors 22 mit den fahrzeugintern gemessenen Werten können nun Rückschlüsse über den Wirkung der Bremse getroffen werden.

Bei einer quasistatische Bremsenprüfung, wie nach Fig. 7 dargestellt, werden adapter-externe Sensoren in Form eines Bremsenprüfstandes 25 genutzt. Dazu wird mit dem Fahrzeug 6 auf einem Bremsenprüfstand 25 die Bremsleistung 24 des Fahrzeugs 6 gemessen. Die vom Bremsenprüfstand 25 ermittelten Messdaten der Bremsleistung 24 werden an den Adapter 1 über geeignete Schnittstellen 26 wie z.B. Bluetooth übertragen. Diese werden im übrigen auch über eine Datenanzeigeleitung 27 an eine Anzeigeeinrichtung 28 des Bremsenprüfstandes 25 übermittelt und dort dargestellt.

Gleichzeitig nutzt der Adapter 1 während der Bremsung die fahrzeuginterne Sensorik 23 und liest den Bremsdruck im Fahrzeug 6 kontinuierlich aus. Dies geschieht durch Absenden eines Abfragebefehls und Auswerten des jeweiligen Reaktionssignals.

Durch Auswertung und Vergleich der fahrzeugexternen Messung mit den fahrzeugintern gemessenen Werten können nun Rückschlüsse über die Wirkung der Bremse getroffen werden.

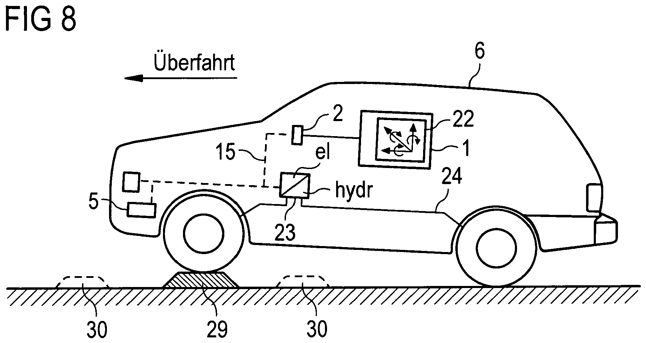

In Fig. 8 ist eine Stoßdämpferprüfung mittels interner Sensorik 22 dargestellt. Eine Schwingungsmessung erfolgt nach Anregung durch eine Fahrt über eine äußere physische Erregung 29 in Form einer Schwelle, Rampe o.ä., durch Bewertung des Ausschwingverhaltens. Die physische Erregung 29 kann auch periodisch durch eine Überfahrt mehrerer Huckel 30 erfolgen, um den Fahrzeugaufbau in Resonanz zu versetzen. Das Erreichen der Resonanz ist einerseits abhängig von dem Abstand der Huckel 30, und andererseits der Überfahrtsgeschwindigkeit des Fahrzeugs 6.

Die Höhe der Resonanz lässt Aussagen zum Zustand der Achsdämpfung zu.

Dazu wird die Schwingung mittels eines 3-Achs-Beschleunigungs- und/oder eines 3-Achs-Drehratensensors 22 aufgenommen. Das System wird sodann geeignete Schwingungsdämpfergrößen, wie beispielsweise Abklingkonstante, Dämpfungsmaß oder Dämpfungs-Güte bewertet.

Die Ausrichtung des Adapters 1 im Auto 6 selbst erfolgt mittels Ermittlung des Erdbeschleunigungsvektors und durch den Beschleunigungsvektor, während der Geschwindigkeitserhöhung des Fahrzeugs(positive Beschleunigung)
Die ermittelten Werte können hinsichtlich ihrer Güte bzw. der Bewertbarkeit klassifiziert werden. Dies geschieht durch die Erkennung von vermeidbaren Messfehlern oder einer Kompensation von Messfehlern durch geeignete mathematische Verfahren. Solche Messfehler können durch schräges Auffahren, durch Störschwingungen auf Grund von unebener Fahrbahn, durch eine Fehlkalibrierung wegen Kurvenanfahrt oder durch zu hohe Geschwindigkeit auftreten. Über eine geschickte Auswertung ist eine achs- oder radspezifische Zuordnung oder eine Trennung der Messwerte möglich.

### Bezugszeichenliste

- 1: Adapter
- 2: Fahrzeug-Diagnose-Schnittstelle
- 3: Interface
- 4: Speicher
- 5: Steuergerät
- 6: Fahrzeug
- 7: Verbau-Datei
- 8: Fahrzeugkomponente
- 9: Ablaufbeschreibungsdatei
- 10: Steuergeräte-Beschreibungsdatei
- 11: Prozessor
- 12: Schnittstelle für externen Rechner
- 13: Rechner
- 14: Temperatursensor
- 15: Bus
- 16: Stromversorgung
- 17: Prüfrechner
- 18: PDA
- 19: Steuergerätevariante
- 20: Lichtsystem
- 21: Protokollbeschreibungsdatei
- 22: 3-D-Beschleunigungssensor (adapterinterner Sensor)
- 23: Steuergerät, das den Bremsdruck kontrolliert
- 24: Bremsleitung
- 25: Bremsenprüfstand
- 26: Schnittstelle externer Sensor / Adapter
- 27: Datenanzeigeleitung
- 28: Anzeigeeinrichtung
- 29: physische Erregung
- 30: Huckel

## Patentansprüche

1. Verfahren zur Fahrzeugzustandsuntersuchung eines Fahrzeuges, bei dem Untersuchungen von Ausführung, Zustand, Funktion und / oder Wirkung der verbauten Bauteile und Systeme durchgeführt werden, wobei mittels eines Adapters (1)
- eine Informationsquelle aus mehreren Informationsquellen, nämlich Steuergeräten eines Fahrzeugs, einer Fahrzeug-Diagnose-Schnittstelle, einer EBS-CAN-Schnittstelle, einer Anhänger-Licht-Steckdose, Sensoren auf dem Adapter (1), Sensoren außerhalb des Adapters (1), einer externen Diagnoseeinrichtung oder einem externen Prüfstand, die mit Fahrzeugkomponenten (8) in Wirkungsverbindung stehen und deren jeweilige Konfiguration bekannt ist, ausgewählt wird, zu der ausgewählten Informationsquelle eine Datenverbindung mit der bekannten Konfiguration zu einer Informationssenke, nämlich dem Adapter und/oder einem mit dem Adapter verbundenen Rechner und/oder einer externen Analyseeinheit, aufgebaut wird und eine Analyse vermittels der Plausibilisierung verschiedener Daten gegeneinander oder gegen Referenzwerte mit den Daten der Informationsquelle durchgeführt wird, wobei
- bei der Prüfung eines Fahrzeuges (6) von einem externen Rechner (13) an den Adapter (1) eine den Fahrzeugtyp (A,B, ...Z) kennzeichnende Information sowie eine Liste der zu prüfenden Fahrzeugkomponenten (8) übermittelt wird,
- der Adapter (1) mit der Fahrzeug-Diagnose-Schnittstelle (2) des Fahrzeugs (6) verbunden wird,
- über die Fahrzeug-Diagnose-Schnittstelle (2) ein Steuergerät (5) einer im Fahrzeug (6) verbauten Fahrzeugkomponente (8) adressiert wird, an dieses Abfragebefehle übermittelt und daraus resultierende Reaktionssignale innerhalb von Prüfsequenzen verarbeitet werden, indem
- aus der den Fahrzeugtyp (A,B, ...Z) kennzeichnenden Information und der Liste der zu prüfenden Fahrzeugkomponenten (8) mittels Verbau-Datei, Ablaufbeschreibungsdatei (9), erster und zweiter Steuergeräte-Beschreibungsdatei (10) und erster und zweiter Protokollbeschreibungsdatei (21) jede der zu prüfenden Fahrzeugkomponenten (8) auf Verbau geprüft, nach erfolgreicher Verbauprüfung mittels der in der Ablaufbeschreibungsdatei (9) enthaltenen Prüfsequenzen geprüft und die Ergebnisdaten einschließlich der Reaktionssignale in dem Adapter (1) gespeichert werden.

2. Verfahren nach Anspruch 1, d a dur c h **gekennzeichnet** , dass die mit der ausgewählten Informationsquelle in Wirkungsverbindung stehende Fahrzeugkomponente für die Bereitstellung von Information in der Informationsquelle angeregt wird.

3. Verfahren nach einem der Ansprüche 1 bis 2, **dadurchgekennzeichnet,** dass die Informationssenke mit einer fahrzeugexternen Informationsquelle verbunden wird.

4. Verfahren nach Anspruch 1 bis 3, **dadurch gekennzeichnet, dass** Parameter des Fahrzeuges(6) und/oder der Informationsquellen, die die Untersuchung beeinflussen, vom Adapter (1) gemessen und mit Sollwerten verglichen werden und daraus eine Meldung eines kritischen Zustandes generiert und behandelt wird.

5. Verfahren nach einem der Ansprüche 1 bis 4, **dadurch gekennzeichnet,**
**dass** in dem Adapter (1) jeweils für mehrere Fahrzeugtypen (A,B, ...Z)
- eine Verbau-Datei (7), die eine Information über die fahrzeugtypspezifisch möglichen Fahrzeugkomponenten (8), zumindest in Form von Verweisen auf relevante Steuergeräte (5) und Abfragebefehle einschließlich der Bewertung deren interpretierten Reaktionssignale, beinhaltet,
- eine Ablaufbeschreibungsdatei (9), die neben einem Verweis auf die Verbau-Datei (7) eine Beschreibung aller für den Fahrzeugtyp (A,B, ...Z) verfügbaren Prüfsequenzen enthält,
- eine erste und eine zweite Steuergeräte-Beschreibungsdatei (10), die Parameter der Kommunikation mit den Steuergeräten (5) der Fahrzeugkomponenten (8), die durch die Verbau-Datei bzw. Ablaufbeschreibungsdatei referenzierten Abfragebefehle, einschließlich der Interpretation der Reaktionssignale, sowie Regeln zur Erkennung der jeweiligen Steuergerätevariante, beinhaltet,
- eine erste und eine zweite Protokollbeschreibungsdatei (21), die zur Ablage von über die Steuergerätebeschreibungsdateien (10) übergreifenden Informationen dient,
gespeichert wird.

6. Verfahren nach einem der Ansprüche 1 bis 5, **dadurch gekennzeichnet, dass** eine Prüfung als Verbauprüfung durchgeführt wird, derart, dass mittels der Verbau-Datei (7), der Ablaufbeschreibungsdatei (9) und den Steuergeräte- und Protokollbeschreibungsdateien (10), (21) Steuergeräte (5) der in der der Liste der zu prüfenden Fahrzeugkomponenten (8) verzeichneten Fahrzeugkomponenten (8) adressiert, an diese Abfragebefehle ausgegeben werden und die daraufhin von dem jeweiligen Steuergerät (5) empfangenen Reaktionssignale gesammelt und mit Sollwerten verglichen werden und bei Übereinstimmung die Information, dass die entsprechenden Fahrzeugkomponenten (8) in dem Fahrzeug (6) verbaut worden sind, gewonnen wird und dass in Abhängigkeit des Verbauzustandes einzelner Fahrzeugkomponenten (8) und des Vorhandenseins erforderlicher Steuergerätevarianten ebenfalls die Information über die Ausführbarkeit der den Fahrzeugkomponenten (8) zugeordneten, weitergehenden Prüfsequenzen, erlangt wird.

7. Verfahren nach einem der Ansprüche 1 bis 6, **dadurch gekennzeichnet, dass** bei der Prüfung der Name der zugehörigen Ablaufbeschreibungsdatei (9) als den Fahrzeugtyp (A,B, ...Z) kennzeichnende Information an den Adapter (1) übertragen wird.

8. Verfahren nach einem der Ansprüche 1 bis 6, **dadurch gekennzeichnet, dass** bei der Prüfung die Fahrzeugidentifikationsnummer (FIN) übertragen und mit dem als Reaktionssignal eines Steuergerätes (5) empfangenen Wert verglichen wird.

9. Verfahren nach einem der Ansprüche 1 bis 8, **dadurch gekennzeichnet, dass** in der Steuergeräte-Beschreibungsdatei (10)), jeweils steuergerätevariantenabhängig die durch die Verbau-Datei(7) bzw. Ablaufbeschreibungsdatei (9) referenzierten Abfragebefehle einschließlich der Interpretation der Reaktionssignale, sowie Regeln zur Erkennung der jeweiligen Steuergerätevariante gespeichert werden.

10. Verfahren nach einem der Ansprüche 1 bis 9, **dadurch gekennzeichnet, dass** die in dem Adapter (1) gespeicherten Daten mittels eines externen Rechners (13) aktualisiert werden.

11. Verfahren nach einem der Ansprüche 9 oder 10, **dadurch gekennzeichnet, dass** die Steuergeräte-Beschreibungsdatei Regeln zur Erkennung der jeweiligen Steuergerätevariante beinhaltet und eine Prüfung als Variantenprüfung durchgeführt wird, derart, dass als Bestandteil der Verbauprüfung eine Variantenprüfung durchgeführt wird, dabei die Steuergeräte der Fahrzeugkomponenten adressiert werden und an diesen Steuergeräten einer Variantenabfrage entsprechende Abfragebefehle ausgegeben und die daraufhin empfangenen Reaktionssignale der Steuergeräte mit Sollwerten verglichen werden und nachfolgend die Information gewonnen wird, welche Variante der Steuergeräte vorhanden ist und diese wird in allen weiteren Prüfungen verwendet.

12. Verfahren nach einem der Ansprüche 1 bis 11, **dadurch gekennzeichnet, dass** eine Prüfung als Funktions- und Wirkprüfung durchgeführt wird, derart, dass aufbauend auf den im Rahmen der Verbauprüfung erkannten Steuergerätevarianten, Steuergeräte (5) einer Fahrzeugkomponente adressiert, in der Ablaufbeschreibungsdatei (9) referenzierte Abfragebefehle ausgegeben und empfangene Reaktionssignale einer Plausibilitätsprüfung unterzogen werden.

13. Verfahren nach Anspruch 12, **dadurch gekennzeichnet, dass** die Reihenfolge der Prozessschritte so gewählt wird, dass jedes Steuergerät (5) während der Verbauprüfung nur einmal adressiert wird.

14. Verfahren nach einem der Ansprüche 1 bis 13, **dadurch gekennzeichnet, dass** zumindest die Parameter des Fahrzeuges (6) und/oder des Adapters (1), die die Prüfung beeinflussen, vom Adapter (1) gemessen und mit Sollwerten verglichen werden und daraus eine Meldung eines kritischen Zustandes generiert und behandelt wird.

15. Anordnung zur Fahrzeugzustandsuntersuchung eines Fahrzeuges zur Durchführung des Verfahrens nach einem der Ansprüche 1 bis 14, **dadurch gekennzeichnet,dass** ein Adapter (1) mit einem mit einer Informationsquelle über eine Fahrzeug-Diagnose-Schnittstelle (2) verbindbaren Interface (3) versehen ist, einen Speicher (4) zum Speichern von Konfigurationen einer Verbindung zur Kommunikation mit der Informationsquelle und einem Mittel zur Auswahl einer verbindbaren Informationsquelle aufweist, Mittel zum Speichern von Prüfsequenzen und Reaktionssignalen von Steuergeräten (5) eines Fahrzeuges (6) aufweist, und mit Mitteln (14) zur Messung von Parametern des Fahrzeuges (6) und/oder des Adapters (1), und mit Mitteln zur Prozessor-verarbeitbaren Umsetzung dieser Parameter versehen ist sowie einen Prozessor (11) aufweist und mit einer Schnittstelle (12) für einen externen Rechner (13) versehen ist, dass der Prozessor (11) zumindest mit der Schnittstelle (12), dem oder den Speichern (4) und dem Interface (3) verbunden ist und dass das Interface (3) mittels des externen Rechners (13) und des oder der Speicher (4) an die Konfiguration der Fahrzeug-Diagnose-Schnittstelle (2) des zu prüfenden Fahrzeuges (6) einstellbar ist.

16. Anordnung nach Anspruch 15, **dadurch gekennzeichnet, dass** der Adapter (1) mit einem oder mehreren Speichern (4) zum Speichern jeweils für mehrere Fahrzeugtypen (A,B, ...Z)
- einer Verbau-Datei (7), die eine Information über die fahrzeugtypspezifisch möglichen Fahrzeugkomponenten (8), zumindest in Form von Verweisen auf relevante Steuergeräte (5) und Abfragebefehle, einschließlich der Bewertung deren interpretierten Reaktionssignale beinhaltet,
- einer Ablaufbeschreibungsdatei (9), die neben einer Referenz auf die Verbau-Datei (7) eine Beschreibung aller für den Fahrzeugtyp (A,B, ...Z) verfügbaren Prüfsequenzen enthält,
- einer ersten und einer zweiten Steuergeräte-Beschreibungsdatei (10), die Parameter der Kommunikation mit den Steuergeräten (5) der Fahrzeugkomponenten (8) jeweils steuergeräteabhängig die durch die Verbau-Datei (7) bzw. Ablaufbeschreibungsdatei (9) referenziertem Abfragebefehle einschließlich der Interpretation der Reaktionssignale sowie Regeln zur Erkennung der jeweiligen Steuergerätevariante (19) beinhaltet,
- einer ersten und einer zweiten Protokollbeschreibungsdatei (21), die zur Ablage von über die Steuergerätebeschreibungsdateien (10)übergreifenden Informationen dient,
versehen ist.

## Claims

1. Method for inspecting the vehicle state of a vehicle, in which inspections are performed on the execution, state, function and/or effect of the installed components and systems, wherein an adapter (1) is used
- to select an information source from a plurality of information sources, specifically controllers of a vehicle, a vehicle diagnostic interface, an EBS-CAN interface, a trailer light socket, sensors on the adapter (1), sensors outside the adapter (1), an external diagnostic apparatus or an external test bench that is functionally connected to vehicle components (8) and whose respective configuration is known, a data connection is set up at the selected information source, using the known configuration, to an information sink, specifically the adapter and/or a computer connected to the adapter and/or an external analysis unit, and analysis is performed by way of a plausibility check on different data against one another or against reference values using the data from the information source, wherein
- in the testing of a vehicle (6), information characterizing the vehicle type (A, B, ...Z) and a list of the vehicle components (8) to be tested is transmitted from an external computer (13) to the adapter (1),
- the adapter (1) is connected to the vehicle diagnostic interface (2) of the vehicle (6),
- a controller (5) of a vehicle component (8) installed in the vehicle (6) is addressed via the vehicle diagnostic interface (2), query commands are transmitted to said vehicle component and response signals resulting therefrom are processed within test sequences, in that
- from the information characterizing the vehicle type (A, B, ...Z) and the list of vehicle components (8) to be tested, each of the vehicle components (8) to be tested is tested in terms of installation by way of an installation file, process description file (9), first and second controller description file (10) and first and second protocol description file (21), tested by way of the test sequences contained in the process description file (9) following a successful installation test, and the result data including the response signals are stored in the adapter (1).

2. Method according to Claim 1, **characterized in that** the vehicle component functionally connected to the selected information source is excited in the information source in order to provide information.

3. Method according to either of Claims 1 and 2, **characterized in that** the information sink is connected to an information source external to the vehicle.

4. Method according to Claims 1 to 3, **characterized in that** parameters of the vehicle (6) and/or of the information sources that influence the inspection are measured by the adapter (1) and compared with setpoint values and a notification of a critical state is generated therefrom and processed.

5. Method according to one of Claims 1 to 4, **characterized in that**
the adapter (1) stores the following in each case for a plurality of vehicle types (A, B, ...Z) :
- an installation file (7) that contains information about the possible vehicle components (8) specific to the vehicle type, at least in the form of references to relevant controllers (5) and query commands, including the evaluation of their interpreted response signals,
- a process description file (9) that, in addition to a reference to the installation file (7), contains a description of all of the test sequences available for the vehicle type (A, B, ...Z) ,
- a first and a second controller description file (10) that contain parameters of the communication with the controllers (5) of the vehicle components (8), the query commands referenced by the installation file or process description file, including the interpretation of the response signals, as well as rules for identifying the respective controller variant,
- a first and a second protocol description file (21) that serve to store information spanning the controller description files (10).

6. Method according to one of Claims 1 to 5, **characterized in that** a test in the form of an installation test is performed such that the installation file (7), the process description file (9) and the controller and protocol description files (10), (21), are used to address controllers (5) of the vehicle components (8) indexed in the list of vehicle components (8) to be checked, output query commands to said vehicle components and compile the response signals then received from the respective controller (5) and compare them with setpoint values and, in the event of a match, the information that the corresponding vehicle components (8) have been installed in the vehicle (6) is obtained and that, depending on the installed state of individual vehicle components (8) and the presence of required controller variants, the information about the executability of the further test sequences associated with the vehicle components (8) is likewise obtained.

7. Method according to one of Claims 1 to 6, **characterized in that**, in the test, the name of the associated process description file (9) is transmitted to the adapter (1) as information characterizing the vehicle type (A, B, ...Z).

8. Method according to one of Claims 1 to 6, **characterized in that**, in the test, the vehicle identification number (FIN) is transmitted and compared with the value received as response signal from a controller (5).

9. Method according to one of Claims 1 to 8, **characterized in that** the query commands referenced by the installation file (7) or process description file (9), including the interpretation of the response signals, as well as rules for identifying the respective controller variant, are stored, in each case in a manner depending on the controller variant, in the controller description file (10) .

10. Method according to one of Claims 1 to 9, **characterized in that** the data stored in the adapter (1) are updated by way of an external computer (13).

11. Method according to either of Claims 9 and 10, **characterized in that** the controller description file contains rules for identifying the respective controller variant and a test in the form of a variant test is performed such that, as part of the installation test, a variant test is performed, in which the controllers of the vehicle components are addressed and query commands corresponding to a variant query are output to these controllers and the response signals that are then received from the controllers are compared with setpoint values, and the information is then obtained as to which variant of the controllers is present, and this is used in all further tests.

12. Method according to one of Claims 1 to 11, **characterized in that** a test in the form of a functional and operative test is performed such that, building on the controller variants identified in the context of the installation test, controllers (5) of a vehicle component are addressed, query commands referenced in the process description file (9) are output and received response signals are subjected to a plausibility check.

13. Method according to Claim 12, **characterized in that** the order of the process steps is selected such that each controller (5) is addressed only once during the installation test.

14. Method according to one of Claims 1 to 13, **characterized in that** at least the parameters of the vehicle (6) and/or of the adapter (1) that influence the test are measured by the adapter (1) and compared with setpoint values and a notification of a critical state is generated therefrom and processed.

15. Arrangement for inspecting a vehicle state of a vehicle for performing the method according to one of Claims 1 to 14, **characterized in that** an adapter (1) is provided with an interface (3) able to be connected to an information source via a vehicle diagnostic interface (2), has a memory (4) for storing configurations of a connection for communication with the information source and a means for selecting a connectable information source, has means for storing test sequences and response signals from controllers (5) of a vehicle (6), and is provided with means (14) for measuring parameters of the vehicle (6) and/or of the adapter (1), and with means for the processor-based implementation of these parameters, and has a processor (11) and is provided with an interface (12) for an external computer (13), that the processor (11) is connected at least to the interface (12), the memory or memories (4) and the interface (3), and that the interface (3) is able to be set to the configuration of the vehicle diagnostic interface (2) of the vehicle (6) to be tested by way of the external computer (13) and the memory or memories (4).

16. Arrangement according to Claim 15, **characterized in that** the adapter (1) is provided with one or more memories (4) for storing, in each case for a plurality of vehicle types (A, B, ...Z):
- an installation file (7) that contains information about the possible vehicle components (8) specific to the vehicle type, at least in the form of references to relevant controllers (5) and query commands, including the evaluation of their interpreted response signals,
- a process description file (9) that, in addition to a reference to the installation file (7), contains a description of all of the test sequences available for the vehicle type (A, B, ...Z),
- a first and a second controller description file (10) that contain parameters of the communication with the controllers (5) of the vehicle components (8), the query commands referenced by the installation file (7) or process description file (9), including the interpretation of the response signals, as well as rules for identifying the respective controller variant (19), in each case in a manner depending on the controller variant,
- a first and a second protocol description file (21) that serve to store information spanning the controller description files (10).

## Revendications

1. Procédé d'analyse d'état de véhicule d'un véhicule, lors duquel des analyses de l'exécution, de l'état, du fonctionnement et/ou de l'effet des composants et systèmes sont effectuées, procédé selon lequel, au moyen d'un adaptateur (1),
- une source d'informations est sélectionnée parmi plusieurs sources d'informations, à savoir des contrôleurs d'un véhicule, une interface de diagnostic de véhicule, une interface EBS-CAN, une prise à enfichage d'éclairage de remorque, des capteurs sur l'adaptateur (1), des capteurs à l'extérieur de l'adaptateur (1), un dispositif de diagnostic externe ou un banc d'essai externe, qui sont en liaison fonctionnelle avec des composants de véhicule (8) et dont la configuration respective est connue, une liaison de données est établie avec la source d'informations sélectionnée avec la configuration connue vers un collecteur d'informations, à savoir l'adaptateur et/ou un ordinateur connecté à l'adaptateur et/ou une source d'analyse externe, et une analyse est effectuée au moyen du contrôle de la plausibilité de différentes données entre elles ou par rapport à des données de référence avec les données de la source d'informations,
- lors du contrôle d'un véhicule (6), une information qui caractérise le type de véhicule (A, B, ..., Z) ainsi qu'une liste des composants de véhicule (8) à contrôler étant communiquée à l'adaptateur (1) par un ordinateur externe (13),
- l'adaptateur (1) étant connecté à l'interface de diagnostic de véhicule (2) du véhicule (6),
- un contrôleur (5) d'un composant de véhicule (8) installé dans le véhicule (6) étant adressé par le biais de l'interface de diagnostic de véhicule (2), des instructions d'interrogation lui étant communiquées et les signaux de réaction qui en résultent étant traités au sein de séquences de contrôle, en ce que
- un contrôle de l'installation est effectué à partir de l'information qui caractérise le type de véhicule (A, B, ..., Z) et de la liste des composants de véhicule (8) à contrôler au moyen d'un fichier d'installation, d'un fichier de description de déroulement (9), d'un premier et d'un deuxième fichier de description de contrôleurs (10) ainsi que d'un premier et d'un deuxième fichier de description de protocole (21) de chacun des composants de véhicule (8) à contrôler, les séquences de contrôle contenues dans le fichier de description de déroulement (9) sont contrôlées après un contrôle positif de l'installation et les données de résultat, y compris les signaux de réaction, sont mémorisées dans l'adaptateur (1) .

2. Procédé selon la revendication 1, **caractérisé en ce que** le composant de véhicule qui se trouve en liaison fonctionnelle avec la source d'informations sélectionnée est excité pour la mise à disposition d'informations dans la source d'informations.

3. Procédé selon l'une des revendications 1 à 2, **caractérisé en ce que** le collecteur d'informations est relié à une source d'informations externe au véhicule.

4. Procédé selon l'une des revendications 1 à 3, **caractérisé en ce que** les paramètres du véhicule (6) et/ou des sources d'informations qui influencent l'analyse sont mesurés par l'adaptateur (1) et comparés avec des valeurs de consigne et un message d'un état critique étant généré à partir de cela puis traité.

5. Procédé selon l'une des revendications 1 à 4, **caractérisé en ce que**
dans l'adaptateur (1), respectivement pour plusieurs types de véhicule (A, B, ..., Z), est mémorisé
- un fichier d'installation (7), qui contient une information à propos des composants de véhicule (8) possibles spécifiquement au véhicule, au moins sous la forme de renvois sur les contrôleurs (5) concernés et d'instructions d'interrogation, y compris l'évaluation de leurs signaux de réaction interprétés,
- un fichier de description de déroulement (9) qui, outre un renvoi au fichier d'installation (7), contient une description de toutes les séquences de contrôle disponibles pour le type de véhicule (A, B, ..., Z),
- un premier et un deuxième fichier de description de contrôleurs (10), qui contiennent les paramètres de communication avec les contrôleurs (5) des composants de véhicule (8), les instructions d'interrogation référencées par le fichier d'installation ou le fichier de description de déroulement, y compris l'interprétation des signaux de réaction, ainsi que des règles de reconnaissance de la variante de contrôleur respective,
- un premier et un deuxième fichier de description de protocole (21), lesquels servent à stocker des informations couvrant tous les fichiers de description de contrôleurs (10).

6. Procédé selon l'une des revendications 1 à 5, **caractérisé en ce qu'**un contrôle est réalisé sous la forme d'un contrôle d'installation de telle sorte que les contrôleurs (5) des différents composants de véhicule (8) répertoriés dans la liste des composants de véhicule (8) sont adressés au moyen du fichier d'installation (7), du fichier de description de déroulement (9) et des fichiers de description de contrôleurs et de protocole (10), (21), des instructions d'interrogation sont délivrées à ceux-ci et les signaux de réaction reçus par le contrôleur (5) respectif sont regroupés et comparés avec des valeurs de consigne et, en cas de concordance, l'information selon laquelle les composants de véhicule (8) correspondant ont été installés dans le véhicule (6) est obtenue et **en ce qu'**en fonction de l'état d'installation des composants de véhicule (8) individuels et de la présence des variantes de contrôleur nécessaires, l'information à propos de l'aptitude à l'exécution des autres séquences de contrôle associées aux composants de véhicule (8) est également obtenue.

7. Procédé selon l'une des revendications 1 à 6, **caractérisé en ce que** lors du contrôle, le nom du fichier de description de déroulement (9) associé est transmis à l'adaptateur (1) en tant qu'information identifiant le type de véhicule (A, B, ..., Z) .

8. Procédé selon l'une des revendications 1 à 6, **caractérisé en ce que** lors du contrôle, le numéro d'identification du véhicule (FIN) est transmis et comparé avec la valeur reçue en tant que signal de réaction d'un contrôleur (5).

9. Procédé selon l'une des revendications 1 à 8, **caractérisé en ce que** dans le fichier de description de contrôleurs (10) sont respectivement mémorisées, en fonction de la variante de contrôleur, les instructions d'interrogation référencées par le fichier d'installation (7) ou le fichier de description de déroulement (9), y compris l'interprétation des signaux de réaction, ainsi que des règles de reconnaissance de la variante de contrôleur respective.

10. Procédé selon l'une des revendications 1 à 9, **caractérisé en ce que** les données mémorisées dans l'adaptateur (1) sont actualisées au moyen d'un ordinateur (13) externe.

11. Procédé selon l'une des revendications 9 ou 10, **caractérisé en ce que** le fichier de description de contrôleurs contient des règles de reconnaissance de la variante de contrôleur respective et un contrôle est effectué en tant que contrôle de variante de telle sorte qu'un contrôle de variante est réalisé en tant qu'élément constitutif d'un contrôle d'installation, les contrôleurs des composants de véhicule sont ici adressés et une instruction d'interrogation correspondant à une interrogation de variante est délivrée à ces contrôleurs et les signaux de réaction des contrôleurs reçus là-dessus sont comparés avec des valeurs de consigne, puis l'information relative à la variante du contrôleur qui est présente est ensuite obtenue et celle-ci est utilisée dans tous les autres contrôles.

12. Procédé selon l'une des revendications 1 à 11, **caractérisé en ce qu'**un contrôle est réalisé sous la forme d'un contrôle de fonctionnement et d'efficacité de telle sorte qu'en s'appuyant sur les variantes de contrôleur reconnues dans le cadre du contrôle d'installation, les contrôleurs (5) d'un composant de véhicule sont adressés, les instructions d'interrogation référencées dans le fichier de description de déroulement (9) sont délivrées et les signaux de réaction reçus sont soumis à un contrôle de plausibilité.

13. Procédé selon la revendication 12, **caractérisé en ce que** la séquence des étapes du processus est choisie de telle sorte que chaque contrôleur (5) n'est adressé qu'une seule fois pendant le contrôle d'installation.

14. Procédé selon l'une des revendications 1 à 13, **caractérisé en ce qu'**au moins les paramètres du véhicule (6) et/ou de l'adaptateur (1) qui influencent le contrôle sont mesurés par l'adaptateur (1) et comparés avec des valeurs de consigne et un message d'un état critique est généré à partir de cela puis traité.

15. Arrangement d'analyse d'état de véhicule d'un véhicule destiné à mettre en œuvre le procédé selon l'une des revendications 1 à 14, **caractérisé en ce qu'**un adaptateur (1) est pourvu d'une interface (3) qui peut être connectée à une source d'informations par le biais d'une interface de diagnostic de véhicule (2), possède une mémoire (4) destinée à mémoriser des configurations d'une connexion destinée à la communication avec la source d'informations et un moyen servant à la sélection d'une source d'informations connectable, possède des moyens destinés à mémoriser des séquences de contrôle et des signaux de réaction de contrôleurs (5) d'un véhicule (6), et est pourvu de moyens (14) destinés à mesurer des paramètres du véhicule (6) et/ou de l'adaptateur (1), et de moyens destinés à la conversion de ces paramètres sous une forme traitable par processeur et possède aussi un processeur (11) et est pourvu d'une interface (12) pour un ordinateur (13) externe, **en ce que** le processeur (11) est connecté au moins à l'interface (12), à la ou aux mémoires (4) et à l'interface (3) et **en ce que** l'interface (3) est réglable au moyen de l'ordinateur (13) externe et de la ou des mémoires (4) à la configuration de l'interface de diagnostic de véhicule (2) du véhicule (6) à contrôler.

16. Arrangement selon la revendication 15, **caractérisé en ce que** l'adaptateur (1) est pourvu d'une ou plusieurs mémoires (4) destinées à mémoriser respectivement, pour plusieurs types de véhicule (A, B, ..., Z),
- un fichier d'installation (7), qui contient une information à propos des composants de véhicule (8) possibles spécifiquement au véhicule, au moins sous la forme de renvois sur les contrôleurs (5) concernés et d'instructions d'interrogation, y compris l'évaluation de leurs signaux de réaction interprétés,
- un fichier de description de déroulement (9) qui, outre une référence au fichier d'installation (7), contient une description de toutes les séquences de contrôle disponibles pour le type de véhicule (A, B, ..., Z),
- un premier et un deuxième fichier de description de contrôleurs (10), qui contiennent les paramètres de communication avec les contrôleurs (5) des composants de véhicule (8), respectivement en fonction des contrôleurs, les instructions d'interrogation référencées par le fichier d'installation (7) ou le fichier de description de déroulement (9), y compris l'interprétation des signaux de réaction, ainsi que des règles de reconnaissance de la variante de contrôleur (19) respective,
- un premier et un deuxième fichier de description de protocole (21), lesquels servent à stocker des informations couvrant tous les fichiers de description de contrôleurs (10).
